# EUROPEAN PATENT SPECIFICATION

(11) **EP 1 818 500 B1**
(45) Date of publication and mention of the grant of the patent: **16.12.2009**
(21) Application number: 06002761.2
(22) Date of filing: 10.02.2006
(51) Int. Cl.: E21B 10/24

(54) **Positive pressure equalizing system**
Druckausgleichssystem
Système d'équilibrage des pressions

(43) Date of publication of application: 15.08.2007
(73) Proprietor: Omni Oil Technologies, Dubai (AE)
(72) Inventor: Bassal, Adel Ali, Jebel Ali (Dubai) (AE)
(74) Representative: Hyden, Martin Douglas

(56) References cited:
- US-A- 3 230 020
- US-A- 4 199 856
- US-A- 4 328 873
- US-A- 5 072 795
- US-A1- 2003 040 369
- US-B1- 6 261 069

## Description

### FIELD OF THE INVENTION

The present invention relates to a pressure equalizing system used when devices are placed in a high pressure environment while they have an internal lubrication system.

### BACKGROUND OF THE INVENTION

In a high pressure environment that has fluids detrimental to lubrication systems, a special arrangement and equalizing system should be in place inside the lubrication system.

In general, devices with internal lubrication systems are sealed from the environment by means of seals. These seals are made of rubber or Teflon or a similar material.

Said seals, can resist limited pressure differences. If the pressure difference is greater than what seals are anticipated to resist, a pressure equalizing system must be added to the lubrication system. The equalizing system works to compensate the outer pressure to the lubrication system internal pressure. This equalization relieves the pressure difference across the seals. This development saves the said seals from premature wear or rupture, resulting in prolonging said seals' life.

The positive pressure equalizing system provides a positive pressure on the lubricant inside the lubrication system.

US4328873 discloses an automatic depth compensating system for controlling the pressure in a volume such as the interior of a rotary drill bit. The system comprises pressure compensating devices comprising differential piston devices having a spring for biasing the differential piston, and pressure surge compensating devices comprising a cylinder, a piston positioned in the cylinder and forming a chamber therein and first and second check valves for opening in response to predetermined pressure differentials between the environment and the interior of the volume. US4328873 is considered the closest prior art and can form a basts for the preamble of the claim. US6261069 discloses an apparatus for equalizing pressure between a lubrication fluid for lubricating a pump and a combustion fluid located at a low pressure side of the pump wherein the pump has a rotatable shaft. The apparatus includes a wall defining a bore within the pump wherein a first end of the bore is configured to receive a lubrication fluid and a second end of the bore is configured to receive combustion fluid. An equalizing element is disposed within the bore for separating the lubrication fluid and the combustion fluid and may be at least partially movable in response to pressure differences caused, e.g., by differences in thermal expansion between the lubrication fluid and the combustion fluid. US2003/0040369 discloses a slip joint including a structure that prevents a negative pressure situation from occurring within a sealed lubricant chamber during operation thereof. The slip joint includes a male splined member having a plurality of external splines formed thereon that cooperate with a plurality of internal splines formed on a female splined member. The cooperating splines are disposed within a lubricant chamber defined at one end by a seal assembly and at the other end by a pressure regulator assembly that maintains a positive pressure situation within the lubricant chamber during operation thereof. To accomplish this, the pressure regulator assembly includes a housing having an open end that faces toward the lubricant chamber.; A spring urges the pressure compensator assembly toward the lubricant chamber. As a result, the pressure compensator assembly compresses the lubricant disposed within the sealed lubricant chamber and, accordingly, functions to maintain a positive pressure situation within the lubricant chamber.

### SUMMARY OF THE INVENTION

The invention provides a positive pressure equalizing lubrication system as set forth in the accompanying claim.

This invention relates to the problem of having a lubrication system in harsh and high pressurized environments, where fluids of the environment could invade and contaminate the lubrication system. Ideas for how to isolate lubrication systems in such environment are based on equalizing the pressure inside the lubrication system with the pressure in the outside of the lubrication system.

This invention not only equalizes the outside pressure with the inside pressure to protect the seals that isolates these said two media, it also, accounts for the energy consumed in the response of the lubrication equalizing system to any pressure change.

An in house research was carried out to theoretically calculate that energy amount, which was verified by experiments. This resulted in calculating the necessary energy stored in the compressed spring.

### DESCRIPTION OF DRAWINGS

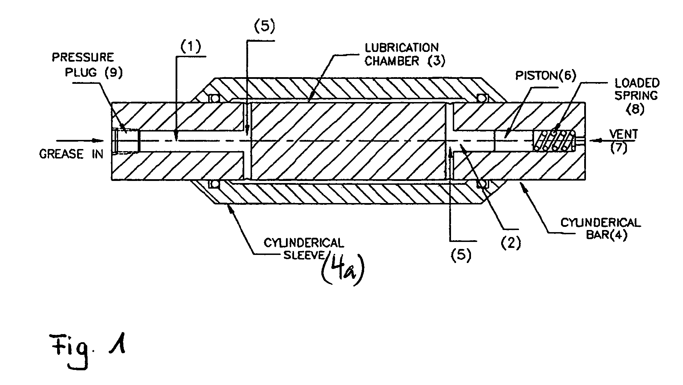

Figure 1 shows a system according to the invention

### DESCRIPTION OF THE EMBODIMENT

The positive equalizing system shown in Figure 1 has a body (4) in the form of a cylindrical bar which is surrounded by a cylindrical sleeve (4a) to define a lubrication chamber (3). The body (4) has two axially extending holes (1,2) for passing lubricants to the lubrication chamber (3). Said body (4) has two through holes (5) extending perpendicular from the two axial holes (1,2). These two perpendicular holes (5) allow lubricants injected from holes (1,2) to pass to the lubrication chamber (3). A pressurized piston (6) is located in the axial hole (2) is pushed back by injected lubricant from hole (1) against a spring (8) positioned in the axial hole (2) and loaded to a critical pressure value. A vent (7) extends through the end of the axial hole (2) to allow free piston movement in both directions. After lubricant injection through hole (1), the lubrication system is sealed by pressure plug (9).

A system according to the invention achieves a high sensitivity response for pressure change in the surrounding environment. The system measures the lubrication system internal energy losses due to friction and lubrication movement in down hole conditions and compensates for these losses by the energy stored in the spring inside the system. Keeping a slight positive pressure on the lubricant chamber eliminates the chance of surrounding fluids invading the lubrication chamber. Continuous lubrication for the used seals of the system is guaranteed by continuously lubricating the seals using the slight positive pressure added to the system. The system responds to pressure change in the Environment with no time lag and with little pressure difference.

## Claims

1. A downhole positive pressure equalizing lubrication system, **characterised by** comprising:
• a body in the form of a cylindrical bar (4) which is surrounded by a cylindrical sleeve (4a) to define a lubrication chamber (3) therebetween;
• first and second co-axial holes (1,2) extending through the body for passing lubricants to the lubrication chamber (3);
• two through holes (5) extending perpendicular from the first and second co-axial holes (1,2) to allow lubricants injected from said holes (1,2) to pass to the lubrication chamber (3);
• a pressurized piston (6) located in the second co-axial hole (2) so as to be pushed back by injected lubricant through the first co-axial hole (1) against a spring (8) positioned in the second co-axial hole (2) and loaded to a pressure value; and
• a vent (7) extending through the end of the second co-axial hole (2) to allow free piston movement in both directions;
wherein, after lubricant injection through the first co-axial hole (1), the lubrication system is sealed by pressure plug (9) in the first co-axial hole (1).

## Patentansprüche

1. Bohrlochüberdruckausgleichsschmiersystem, **dadurch gekennzeichnet, dass** es Folgendes umfasst:
- einen Körper in Form einer zylindrischen Stange (4), die von einer zylindrischen Hülse (4a) umgeben ist, um eine Schmierkammer (3) dazwischen zu definieren,
- ein erstes und ein zweites koaxiales Loch (1, 2), die sich durch den Körper erstrecken, um Schmiermittel zu der Schmierkammer (3) zu leiten;
- zwei Durchgangslöcher (5), die sich senkrecht von dem ersten und dem zweiten koaxialen Loch (1, 2), erstrecken, damit eingespritzte Schmiermittel von den Löchern zu der Schmierkammer (3) gelangen;
- einen druckbeaufschlagten Kolben (6), der in dem zweiten koaxialen Loch (2) angeordnet ist, um durch durch das erste koaxiale Loch (1) eingespritztes Schmiermittel gegen eine in dem zweiten koaxialen Loch (2) positionierte und gespannte Feder (8) auf einen Druckwert zurückgedrückt zu werden; und
- eine Lüftung (7), die sich durch das Ende des zweiten koaxialen Lochs (2) erstreckt, um eine freie Kolbenbewegung in beiden Richtungen zu gestatten,
wobei nach Einspritzung von Schmiermittel durch das erste koaxiale Loch (1) das Schmiersystem durch einen Druckstopfen (9) in dem ersten koaxialen Loch (1) abgedichtet wird.

## Revendications

1. Système de lubrification d'équilibrage des pressions positives de fond, **caractérisé en ce qu'**il comprend :
- un corps en forme de barre cylindrique (4) qui est entouré par un manchon cylindrique (4a) pour définir une chambre de lubrification (3) entre eux ;
- des premier et deuxième trous coaxiaux (1, 2) s'étendant à travers le corps pour faire passer des lubrifiants dans la chambre de lubrification (3) ;
- deux trous traversants (5) s'étendant perpendiculairement depuis les premier et deuxième trous coaxiaux (1, 2) pour permettre aux lubrifiants injectés depuis lesdits trous (1, 2) de passer dans la chambre de lubrification (3) ;
- un piston sous pression (6) situé dans le deuxième trou coaxial (2) de manière à être repoussé par du lubrifiant injecté à travers le premier trou coaxial (1) à l'encontre d'un ressort (8) positionné dans le deuxième trou coaxial (2) et chargé à une valeur de pression ; et
- un évent (7) s'étendant à travers l'extrémité du deuxième trou coaxial (2) pour permettre le libre mouvement du piston dans les deux directions,
dans lequel, après l'injection de lubrifiant à travers le premier trou coaxial (1), le système de lubrification est scellé par un bouchon de pression (9) dans le premier trou coaxial (1).
